# EUROPÄISCHE PATENTSCHRIFT

(11) **EP 4 644 446 B1**
(45) Veröffentlichungstag und Bekanntmachung des Hinweises auf die Patenterteilung: **12.08.2026**
(21) Anmeldenummer: 25173632.8
(22) Anmeldetag: 30.04.2025
(51) Int. Cl.: C08G 18/08, C08G 18/12, C08G 18/40, C08G 18/42, C08G 18/44, C08G 18/48, C08G 18/72, C08G 18/75, C08G 18/79, C09D 175/04, C09D 175/08

(54) **VERFAHREN ZUR HERSTELLUNG EINER WÄSSRIGEN DISPERSION UMFASSEND ANIONISCH UND NICHT-IONISCH STABILISIERTE POLYURETHANE, SO ERHALTENE WÄSSRIGE POLYURETHAN-DISPERSIONEN UND DEREN VERWENDUNG**
METHOD FOR PRODUCING AN AQUEOUS DISPERSION COMPRISING ANIONICALLY AND NON-IONICALLY STABILISED POLYURETHANES, AQUEOUS POLYURETHANE DISPERSIONS THUS OBTAINED AND THEIR USE
PROCÉDÉ DE PRÉPARATION D'UNE DISPERSION AQUEUSE COMPRENANT DES POLYURÉTHANES STABILISÉS PAR VOIE ANIONIQUE ET NON-IONIQUE, DISPERSIONS AQUEUSES DE POLYURÉTHANE AINSI OBTENUES ET LEUR UTILISATION

(30) Priorität: 02.05.2024 DE 102024112350
(43) Veröffentlichungstag der Anmeldung: 05.11.2025
(73) Patentinhaber: SYNTHOPOL CHEMIE Dr. rer. pol. Koch GmbH & CO. KG, 21614 Buxtehude (DE)
(72) Erfinder: Simon, Rolf, 21614 Buxtehude (DE); Spohnholz, Rüdiger, 22523 Hamburg (DE)
(74) Vertreter: Müller Schupfner & Partner Patent- und Rechtsanwaltspartnerschaft mbB (Hamburg)

(56) Entgegenhaltungen:
- EP-B1- 0 927 211
- WO-A1-2020/111944

## Beschreibung

Die Erfindung betrifft ein Verfahren zur Herstellung von wässrigen anionisch und gleichzeitig nicht-ionisch stabilisierten Polyurethan-Dispersionen, so erhaltene wässrige Polyurethan-Dispersionen, daraus erhältliche Lacke als Ein- oder Zweikomponentensysteme und Oberflächen beschichtet mit dem ausgehärteten Lack unter Verwendung der Polyurethan-Dispersionen als Bindemittel sowie deren Verwendung.

### Stand der Technik und technisches Umfeld

Als wässrige Polymerdispersionen bezeichnet man kolloidal stabile Dispersionen von Polymerpartikeln in einer wässrigen Phase. Der Durchmesser der Polymerpartikel kann zwischen einigen 10 Nanometern und wenigen Mikrometern liegen. Polymerdispersionen können z.B. durch Polymerisation der entsprechenden Monomere in der wässrigen Phase gewonnen werden oder durch Dispergieren eines Polymers in der wässrigen Phase. Wässrige Polyurethan-Dispersionen werden aufgrund ihrer guten Haftungseigenschaften für die Beschichtung auf unterschiedlichsten Untergründen wie Holz, Metall, Kunststoff, Textil und Leder eingesetzt. Als "nicht-ionisch stabilisiert" werden Polyurethane mit eingebauten tensidischen Gruppen bezeichnet, wobei die Gruppe keine dissoziierbaren funktionellen Gruppen enthält und daher bei Kontakt mit Wasser keine Ionen bildet. Andererseits können die Polyurethane "anionisch stabilisiert" sein, wenn in der Kette des Polyurethan-Polymers anionische Gruppen anwesend sind, die das Polyurethan in Wasser anionisch stabilisieren. Vorliegend werden "nicht-ionisch stabilisiert" und "nicht-ionogen stabilisiert" als Synonyme verstanden.

Aus der DE102013108828 A1 sind Einbrennlacke auf Basis einer OH-terminierten PU-Dispersion mit blockierten Polyisocyanaten bekannt. Die PU-Dispersion ist ein Kern-Schale-Polymer mit einer anionischen Stabilisierung, aber ohne zusätzliche nicht-ionogene Stabilisierung. Insbesondere werden nach der DE102013108828 A1 keine Alkohole mit Polyalkylenglykolether-Seitengruppe und darüber hinaus auch andere Diole eingesetzt.

WO 2020/111944 A offenbart die Herstellung einer wässrigen Polyurethan-Dispersion mit geringem VOC und hohem Festkörpergehalt, umfassend a) Herstellung eines Prepolymers durch Umsetzung von Polycarbonatdiolen, Dimethylolpropansäure, einem linearen difunktionellen Polyethylenglycolmonomethylether mit (cyclo)aliphatischen Diisocyanaten; b) Dispersion des Prepolymers in Wasser und Reaktion mit Hydrazin und einem sulfonatgruppenhaltigen Diamin, für wasserresistente Filme. EP 0 927 211 B beschreibt die Herstellung einer wässrigen Polyurethan-Dispersion mit guter Lagerstabilität, ohne Zusatz von externen Stabilisatoren, umfassend a) Herstellung eines Prepolymers durch Umsetzung von Polytetramethylenglycol, Dimethylolpropansäure, einem Dispersionsdiol (TDI; PEG, Triol) und einem (cyclo)aliphatischen Diiisocyanat, b) Dispersion in Wasser/ tertiärem Amin als Base und Reaktion mit Diamin, für mechanisch resistente Filme.

### Aufgabe der Erfindung

Aufgabe der vorliegenden Erfindung ist es, Lacke basierend auf Polyurethan-Dispersionen als Bindemittel zur Verfügung zu stellen, wobei die ausgehärteten Lacke eine hohe Beständigkeit gegenüber Wasser und Ethanol auch bei höheren Temperaturen aufweisen sollen.

Nach einer Ausgestaltung sollen die Bindemittel weiterhin kurze Trocknungszeiten der Lacke ermöglichen. Auch soll es möglich sein, die Lacke in bestehenden Anlagen für die Applikation von Lacken, die für konventionelle lösemittelhaltige Systeme konzipiert sind, einzusetzen. Hierbei ist oft die Problematik, dass Wasser als Lösungsmittel ein deutlich langsameres Abdunstverhalten zeigt als Lacke auf Basis von Bindemitteln mit organischen Lösungsmitteln.

### Zusammenfassung der Erfindung

Diese Aufgaben werden gelöst durch ein Verfahren zur Herstellung einer wässrigen Polyurethan-Dispersion umfassend die folgenden Schritte:
a) Herstellung eines ersten Präpolymers durch Umsetzung von
   - Alkoholen mit
   - Isocyanaten mit im Mittel mindestens zwei Isocyanatgruppen pro Molekül, ggf. in Gegenwart eines organischen Lösungsmittels,

   wobei die Alkohole zumindest einen ersten, einen zweiten und einen dritten Alkohol umfassen,
      - der erste, der zweite und der dritte Alkohol im Mittel jeweils mindestens zwei Hydroxyl-Gruppen pro Molekül aufweist,
      - der erste, der zweite und der dritte Alkohol jeweils unterschiedlich ist,
      - der erste Alkohol zumindest eine Polyalkylenglykolether-Seitengruppe (Seitengruppe in Bezug auf die Polymerhauptkette) aufweist,
      - der zweite und dritte Alkohol jeweils keine Polyalkylenglykolether-Seitengruppe aufweist,
      - wobei der zweite Alkohol ein mittleres Molekulargewicht (Zahlenmittel) von 700 bis 5000 g/mol aufweist,
      - wobei der dritte Alkohol ein um mindesten 30%, vorzugsweise mindesten 50%, niedrigeres mittleres Molekulargewicht (Zahlenmittel) als der zweite Alkohol aufweist,
   wobei die Summe der eingesetzten Isocyanate und die Summe der eingesetzten Alkohole ein NCO/OH -Verhältnis von größer 1,1 : 1 bis 2,5 : 1 aufweisen;
b) Umsetzung des ersten Präpolymers mit freien Isocyanatgruppen mit zumindest einem vierten Alkohol und ggf. Zusatz weiterer Isocyanate,
   wobei der vierte Alkohol mindestens zwei Hydroxyl-Gruppen und mindestens eine Carboxyl-Gruppe (-COOH) oder mindestens eine neutralisierte Sulfonat-Gruppe
   (-SO₃⁻) pro Molekül aufweist oder der vierte Alkohol beides ist,
   zum Erhalt eines Kern-Schale-Präpolymers;
c) wenn der vierte Alkohol zumindest teilweise ein Alkohol mit mindestens zwei Hydroxyl-Gruppen und mindestens einer Carboxyl-Gruppe (-COOH) ist, zusammenbringen des Kern-Schale-Präpolymers mit wenigstens einer Base in einer Menge, die geeignet ist, mindestens 50%, vorzugsweise 60 bis 90%, der Carboxyl-Gruppen zu neutralisieren, und Wasser in beliebiger Reihenfolge - vorzugsweise durch Zugabe der Base zum Kern-Schale-Präpolymer und nachfolgendem in Kontakt bringen mit Wasser - zum Erhalt einer wässrigen Dispersion des zumindest teil-neutralisierten Kern-Schale- Präpolymers;
d) Kettenverlängerung des zumindest teil-neutralisierten Kern-Schale-Präpolymers in wässriger Dispersion mit Di- oder Polyaminen und/oder fünften wasserlöslichen Alkoholen mit im Mittel jeweils mindestens zwei Hydroxylgruppen pro Molekül oder Aminoalkoholen zum Erhalt eines Polyurethans in wässriger Dispersion.

Bevorzugte Ausführungsformen sind nachstehend erläutert bzw. durch die Unteransprüche näher beschrieben.

Das Polyurethan in wässriger Dispersion ist vorzugsweise aus folgenden Alkoholen aufgebaut:
1 bis 10 Gew.%, insbesondere 1,5 bis 5 Gew.%, erste Alkohole,
mindestens 40 Gew.%, insbesondere mindestens 50 Gew.%, zweite Alkohole, und
1 bis 10 Gew.%, insbesondere 2 bis 8 Gew.%, dritte Alkohole; und
1 bis 10 Gew.%, insbesondere 2 bis 8 Gew.%, vierte Alkohole,
jeweils bezogen auf das Gewicht des erhaltenen Polyurethans (100 Gew.%), was meint, das erhaltene Polyurethan ohne Wasser zum Dispergieren und ohne etwaige Additive zu berücksichtigen.

Das so erhältliche Polyurethan in wässriger Dispersion weist vorzugsweise einen Gehalt an freien NCO-Gruppen von kleiner 0,2 Gew.%, insbesondere kleiner 0,05 Gew.%, und insbesondere keine NCO-Gruppen auf, bezogen auf die Masse der Polyurethan-Dispersion. Der NCO-Gehalt wird jeweils per Titration nach DIN 53185 bestimmt.

Der erste Alkohol mit im Mittel mindestens zwei Hydroxyl-Gruppen pro Molekül weist zumindest eine Polyalkylenglykolether-Seitengruppe auf und ist z.B. ein Kohlenwasserstoff mit zwei Alkoholgruppen (Hauptkette) und Alkylenoxid-Einheiten in der Seitenkette. Der zweite und dritte Alkohol mit mindestens zwei Hydroxylgruppen pro Molekül weist jeweils keine Alkylenoxid-Einheiten bzw. keine Polyalkylenglykolether-Seitengruppe in der Seitengruppe auf. Der erste, der zweite und dritte Alkohol sind voneinander verschieden, wobei der zweite Alkohol eine mittlere molare Masse (Zahlenmittel Mn) von 700 bis 5000 g/mol aufweist, und der dritte Alkohol eine um mindesten 30%, vorzugsweise mindestens 50%, niedrigere mittlere molare Masse (Mn) als der zweite Alkohol. Der zweite Alkohol und der dritte Alkohol sind nach einer Ausführungsform Polymere gleichen Typs, d.h. aus gleichen oder homologen Monomeren (homolog sind z.B. 1,6-Hexandiol und 1,4-Butandiol) hergestellt, aber in jedem Fall mit unterschiedlicher Kettenlänge.

Zur Wasserlöslichkeit tragen neben den ersten Alkoholen mit Polyalkylenglykolether-Seitenkette, die vierten Alkohole mit Carboxyl-Gruppen und/oder neutralisierten Sulfonat-Gruppen (jeweils insbesondere eine Gruppe pro Molekül) bei. Durch den Kern-Schale-Aufbau des Polyurethans kann die Anzahl an Carboxyl-Gruppen oder Sulfonat-Gruppen, die für die Dispergierbarkeit notwendig ist, geringgehalten werden.

Wenn der vierte Alkohol ein Alkohol mit neutralisierter Sulfonat-Gruppe ist, liegt dieser vorzugsweise als Natrium- oder Kaliumsalz vor.

Das erfindungsgemäße Verfahren ermöglicht die Herstellung von wässrigen Polyurethan-Dispersionen mit Partikelgrößen von vorzugsweise kleiner 170 nm, vorzugsweise von kleiner 150 nm, gemessen durch dynamische Lichtstreuung.

Ebenso betrifft die Erfindung wässrige Polyurethan-Dispersionen, vorzugsweise als Bindemittel für einen Lack, insbesondere einen Klarlack, herstellbar mittels des vorliegend beschriebenen Verfahrens, ggf. unter weiterer Verdünnung mit Wasser, und/oder Lösungsmitteln und Zugabe von z.B. Netzmitteln und/ oder Entschäumern.

Ein Lack, insbesondere Klarlack, ist unter Verwendung der wässrigen Polyurethan-Dispersion als Bindemittel mit zumindest einem Härter zugänglich, wobei der Härter z.B. ausgewählt ist aus einem oder mehreren Mitgliedern der Gruppe bestehend aus Polyisocyanaten, einschließlich blockierten Polyisocyanaten, Polycarbodiimiden, Polyaziridinen und /oder Triazinverbindungen. Ebenso betrifft die Erfindung Oberflächen beschichtet mit dem Lack, wobei die Oberfläche aus Holz, Textil, Leder, Kunststoff, Metall und/ oder einem mineralischen Werkstoff besteht. Die Oberflächen Textil, Leder und Kunststoff können hydrophil bzw. hydrophob sein, die Oberflächen Kunststoff und Metall sind meistens vorbehandelt. Ein Beispiel ist eine Kunststoff-beschichtete Metalloberfläche.

### Detaillierte Beschreibung der Erfindung

Die Alkohole werden als erster, zweiter, dritter, vierter usw. Alkohol bezeichnet, ohne dass dies bedeutet, das mit der Angabe eine Reihenfolge der Umsetzung oder Zugabe, anders als ausdrücklich angegeben definiert werden soll. Der erste, zweite, dritte, vierte usw. Alkohol (Singular) kann jeweils ein Alkohol oder ein Gemisch mehrerer Alkohole sein. Umgekehrt können erste, zweite, dritte, vierte usw. Alkohole (Plural) auch für jeweils nur einen Alkohol stehen. Die Umsetzungen werden als erste oder zweite (usw.) Umsetzungen bezeichnet, was bedeutet, dass diese in dieser Reihenfolge durchgeführt werden, aber nicht notwendigerweise, dass diese unmittelbar aufeinanderfolgen, sondern es können dazwischen weitere zusätzliche Schritte durchgeführt werden, wie beispielhaft Aufreinigungsschritte, Entfernen von Lösungsmittel, Zusatz von Lösungsmitteln, Zugabe bzw. Einbau weiterer Diole / Isocyanate usw..

Die Herstellung der Polyurethan-Dispersionen erfolgt in der Weise, dass in einer ersten Umsetzung (Schritt a)) unter Herstellung eines ersten Präpolymers zumindest drei verschiedene Alkohole mit im Mittel jeweils mindestens zwei Hydroxylgruppen pro Molekül mit Isocyanaten mit im Mittel mindestens zwei Isocyanat-gruppen pro Molekül umgesetzt werden.

Die erste und/oder die zweite Umsetzung (zweite Umsetzung = Schritt b)) kann in einem organischen wasserlöslichen Lösungsmittel mit einem Siedepunkt unter 100°C erfolgen. Das Lösungsmittel ist vorzugsweise ein Keton wie Aceton oder Methylethylketon (MEK) oder deren Mischung. Dipolare aprotische Lösungsmittel wie Pyrrolidone oder Dimethylsulfoxide sind ebenso geeignet, sind aber aus toxikologischen Gründen weniger bevorzugt.

Bei dem ersten Alkohol sind die beiden Hydroxylgruppen (oder weitere) über eine Kohlenwasserstoffkette von z.B. 2 bis 12 C-Atomen, insbesondere 3 bis 8 C-Atomen, verbunden. Der erste Alkohol weist eine nicht-ionische polare Polyalkylenglykolether-Seitengruppe auf, wie sie durch Polyalkoxylierung erhältlich ist und umfasst mehrere Alkylenoxideinheiten. Die Polyalkylenglykolether-Seitenkette weist vorzugsweise im Mittel 5 bis 70 Alkylenoxideinheit auf, besonders bevorzugt im Mittel 7 bis 55 Alkylenoxideinheit pro Seitenkette. Die Seitengruppe kann eine oder mehrere endständige OH-Gruppen aufweisen oder bevorzugt jeweils Alkylverschlossen sein, z.B mittels Methoxy- oder Ethoxy-Gruppen. Vorzugsweise sind die Alkylenoxideinheiten zu größer 50%, insbesondere zu größer 80% Ethylenoxid-Einheiten und auch unabhängig hiervon ist die Endgruppe bevorzugt eine Ethoxy-Gruppe. Bei dem ersten Alkohol handelt es sich insbesondere um ein Diol mit zwei primären und/ oder einer primären und einer sekundären Alkoholgruppe.

Der zweite und der dritte Alkohol sind polymere Alkohole, d.h. durch Polymerisation von ein, zwei oder mehr Monomeren zugänglich, insbesondere zwei oder drei Monomeren. Der zweite Alkohol soll ein mittleres Molekulargewicht (Zahlenmittel) von 700 bis 5000 g/mol, insbesondere 1000 bis 4000 g/mol, aufweisen und der dritte Alkohol ein um mindesten 30%, vorzugsweise mindesten 50%, niedrigeres mittleres Molekulargewicht (Zahlenmittel) als der zweite Alkohol. Die zweiten und dritten Alkohole sind vorzugsweise Polycarbonatpolyole, Polyesterpolyole, Polyetherpolyole, vorzugsweise entsprechende Diole, oder deren Mischungen oder auch Copolymere der zugrunde liegenden Monomere. Bei dem zweiten und/oder dritten Alkohol handelt es sich insbesondere um Alkohole mit zwei- oder drei Hydroxyl-Gruppen, insbesondere jeweils primären Hydroxyl-Gruppen.

Ein Polyesterpolyol ist durch Umsetzung von zweiwertigen oder höherwertigen Alkoholen mit zweiwertigen aliphatischen, cycloaliphatischen, arylaliphatischen oder aromatischen Carbonsäuren und/ oder den entsprechenden Carbonsäureanhydriden erhältlich. Der Alkohol ist vorzugsweise Ethylenglykol, Propan-1,2-diol, Propan-1,3-diol, Butan-1,4-diol, 1,6-Hexandiol, Neopentylglykol, 1,1,1-Trimethylolpropan, 1,4-Cyclohexyldimethanol, 2-Methylpropan-1,3-diol, ein Methylpentandiol, Diethylenglykol, Triethylenglykol, Polyethylenglykol, Polypropylenglykol, Dipropylenglykol, Dibutylenglykol oder eine Mischung davon. Die Carbonsäure oder das Carbonsäureanhydrid ist vorzugsweise Adipinsäure, Phthalsäure, Phthalsäureanhydrid, Isophthalsäure, Terephthalsäure, Tetra- oder Hexahydrophthalsäureanhydrid, Cyclohexyldicarbonsäure, Maleinsäure, Maleinsäureanhydrid, Fumarsäure, dimere Fettsäure, aliphatische, lineare Dicarbonsäure mit einer Kohlenstoffanzahl von 2 bis 20 oder eine Mischung. Nach einer Ausgestaltung sind als Polyesterpolyole auch Polycaprolactondiole geeignet, wobei das Polycaprolactondiol z.B. aus ε-Caprolacton, β-Propiolacton, γ-Butyrolacton und/ oder Methyl-ε-caprolacton oder einer Mischung davon erhältlich ist.

Geeignete Polycarbonatdiole sind erhältlich durch Umsetzung von zwei- und/ oder dreiwertigen Alkoholen mit 2 bis 24, insbesondere 3 bis 10 Kohlenstoffatomen, typischerweise 1,6-Hexandiol, Neopentylglykol, 1,4-Dimethanol-Cyclohexan oder deren Gemischen mit Dimethylcarbonat (DMC) oder Diphenylcarbonat (DPC). Diese Reaktion wird z.B. katalysiert, zum Beispiel durch Tetrabutoxy-Titan, Dibutylzinnoxid oder Basen. In der zweiten Reaktionsstufe wird überschüssiges DMC oder DPC sowie Monoalkohol (Methanol oder Phenol) unter vermindertem Druck entfernt, um die endständige Hydroxylfunktionalität (-OH) freizugegeben. Alternativ können Polycarbonatdiole auch direkt aus Kohlendioxid und einem zwei- oder dreiwertige Alkohol erhalten werden. Ebenso geeignet sind Polyester- oder Polyethercarbonatdiole. Hier werden niedermolekulare lineare Polyester- oder Polyetherpolyole als Starter verwendet und obiger Umsetzung unterzogen.

Polyetherpolyole können durch ringöffnende Polymerisation oder Homo- oder Copolymerisation von Ethylenoxid, Propylenoxid oder Tetrahydrofuran hergestellt werden, insbesondere Propylenoxid oder Propylenoxid und Ethylenoxid. Die Ringöffnung kann anionisch erfolgen, wobei Startmoleküle wie Wasser, Ethylenglykol oder Propylenglykol verwendet werden, um Polyether mit zwei Hydroxy-Endgruppen zu erzeugen. Für die Herstellung von Polyolen mit höheren Funktionalitäten werden Verbindungen wie Glycerin oder Pentaerythrit mit Propylenoxid umgesetzt.

Die Funktionalität des Starters bestimmt dann die Funktionalität des resultierenden Polyetherpolyols. Mit Hilfe von Doppelmetallcyanid (DMC) als Katalysator sind Polyetherpolyole mit höherer Molmasse und engerer Molekulargewichtsverteilung erhältlich.

Daneben ist es auch möglich, Kohlendioxid in das Polymer-Rückgrat einzubauen, um Polyether-Polycarbonat-Polyole zu erzeugen. Geeignete Polyetherpoylole sind z.B. Polymerisate von Polypropylen- oder Polytetramethylenbasis, jeweils über Ether-Brücken verknüpft. Ein Beispiel ist z.B. Polytetramethylenether-Glykol (PTMEG). Weiterhin sind auch Polyesterpolyole denkbar, die als Veresterungskomponente eine mindestens difunktionelle Struktur aufweisen, d.h. eine Alkohol- und/oder Carboxylgruppe zur Veresterung und zusätzlich mindestens eine Carbonsäure mit Doppelbindung wie Acrylsäure oder Methacrylsäure oder deren Ester mit Ethanol oder Methanol erhältlich mittels nachträglicher Umsetzung der Polyurethandispersion zu einer acrylgepfropften Dispersion. Dann sind die Polyurethandispersion der UV-Härtung mit üblichen Photoinitiatoren zugänglich.

Als Isocyanate mit im Mittel mindestens zwei Isocyanat-Gruppen pro Molekül werden insbesondere monomere Diisocyanate, bevorzugt auf aliphatischer Basis, eingesetzt. Üblicherweise besitzen diese monomeren Diisocyanate einen aliphatischen Kohlenwasserstoffrest mit 4 bis 15 Kohlenstoffatomen, einen cycloaliphatischen oder aromatischen Kohlenwasserstoffrest mit 6 bis 15 Kohlenstoffatomen. Beispiele derartiger Diisocyanate sind 1,6-Hexamethylendiisocyanat, 1,4-Diisocyanatocyclohexan, 1-Isocyanato-3,5,5-trimethyl-5-isocyanatomethylcyclohexan und Tetramethylxylylendiisocyanat, sowohl in reiner Form als auch als Isomerengemisch. Diese Diisocyanate können alleine oder auch in Kombination eingesetzt werden.

Ferner sind in Schritt a) oder b) auch Polyole zusätzlich einsetzbar, die neben mindestens einer Hydroxylgruppe über reaktive Doppelbindungen verfügen, so dass eine Pfropfung des späteren Polyurethans mit Acrylmonomeren als auch eine oxidative Trocknung der fertigen Polyurethandispersionen möglich wird. Beispiele hierfür sind Polyesterpolyole, die entweder Acrylsäure und/oder Methacrylsäure oder andere ähnlich aufgebaute höhermolekulare Verbindungen mit Säuregruppen beinhalten. Eingesetzt werden können auch niedermolekulare Monoalkohole, die zumindest eine Säuregruppe im Molekül aufweisen. Beispiele hierfür sind Hydroxyethylacrylat, Hydroxymethylacrylat, Hydroxypropylacrylat oder ähnlich aufgebaute Verbindungen.

Bei dem vierten Alkohol, der zur Herstellung des Kern-Schale-Präpolymers eingesetzt wird, handelt es sich um einen Alkohol mit mindestens zwei Hydroxylgruppen und mindestens einer Carboxyl- oder Sulfonatgruppe. Die molare Masse beträgt vorzugsweise 100 und 500 g/mol. Bevorzugt verwendet wird eine Dimethyol-C2-bis C6-Alkansäure, vorzugsweise 2,2-Bis(hydroxymethyl)butansäure (DMBA) oder 2,2-Bis(hydroxymethyl)propionsäure (DMPA) oder Natrium N-(2-aminoethyl)ami-noethanesulfonat.

Bei Verwendung des vierten Alkohols mit mindestens einer Carboxyl-Gruppe (-COOH) muss diese Gruppe vor oder während der Dispergierung mit z.B. einem tertiären oder sekundären Amin neutralisiert werden. Bevorzugt werden hier niedermolekulare Aminverbindungen eingesetzt, die bei der späteren Applikation schnell verdunsten. Bevorzugte Beispiele sind Triethylamin, N-Ethylmorpholin, Dimethylethanolamin oder ähnliche Verbindungen.

Für die Kettenverlängerung, die bevorzugt nach Dispergierung des Präpolymers in Wasser zur Erhöhung des Molekulargewichtes des Polyurethans erfolgt, werden Di- oder Polyamine und /oder di- und mehrfunktionelle Alkohole und/oder Aminoalkohole eingesetzt. Bevorzugt sind niedermolekulare Diamine wie Ethylendiamine und Diethylentriame, weniger bevorzugt Aminoalkohole wie Ethanolamin oder Diethanolamin. Difunktionelle Alkohole wie 1,4-Butandiol werden zur Kettenverlängerung insbesondere dann eingesetzt, wenn dieser Schritt vor der Dispergierung des Präpolymers in Wasser erfolgt. Ein weiteres Beispiel ist Triethylentetramin.

Nach dem erfindungsgemäßen Verfahren erfolgt die Herstellung des ersten Präpolymers (Schritt a), indem die Isocyanate mit dem ersten Alkohol, den zweiten und dritten Alkoholen mit unterschiedlicher mittlerer molarer Masse (Mn z.B. 600 g/mol kombiniert mit 1000, 2000 oder 3000 g/mol) umgesetzt werden. Durch diesen Reaktionsschritt werden Polyurethane mit unterschiedlich langen Weichsegmenten erzeugt. Hierdurch soll der amorphe Charakter des Polyurethans erhöht und die Ausbildung kristalliner Phasen unterdrückt werden. Es wurde gefunden, dass durch die unterschiedlich langen Weichsegmente auch das Trocknungsverhalten positiv beeinflusst und die chemische Beständigkeit der applizierten und getrockneten Lacke verbessert wird.

Durch den Einbau der ersten Alkohole in das Präpolymer werden Alkylenoxid-Einheiten in der Seitengruppe in das Polyurethan-Molekül eingebaut (zur nicht-ionischen Stabilisierung).

Das so erhaltene Präpolymer weist freie Isocyanat-Gruppen auf, weil die Isocyanate zum Erhalt des ersten Präpolymers im Überschuss eingesetzt wurden. Das NCO/OH -Verhältnis beträgt von größer 1,1 : 1 bis 2,5 : 1.

Insbesondere wenn das theoretische NCO/OH -Verhältnis von größer 1,1 : 1 in der chemischen Umsetzung nicht erreicht wird, werden Isocyanate mit im Mittel mindestens zwei Isocyanatgruppen pro Molekül, wie oben definiert, vor Zugabe zumindest des ersten Anteils des vierten Alkohols zugesetzt mit dem die zweite Umsetzung eingeleitet wird (Schritt b).

Während der Umsetzung zum Kern-Schale-Präpolymer in Schritt b) wird zumindest der vierte Alkohol zugegeben und eingebaut. Die Reaktionsbedingungen für Schritt b) können die gleichen wie für Schritt a) sein. Durch diesen Schritt erfolgt eine anionische Stabilisierung über Carboxylatgruppen in der Hülle des Polyurethans.

Sowohl in der ersten Umsetzung als auch in der zweiten Umsetzung wird dabei mit einem molaren Überschuss an Isocyanat-Gruppen gegenüber den OH-Gruppen gearbeitet. Die erste Umsetzung zum Präpolymer als auch die zweite Umsetzung zum Kern-Schale-Präpolymer erfolgt üblicherweise bei Temperaturen von 40 bis 90°C, bevorzugt 50 und 80°C.

In Schritt c) erfolgt ein Zusammenbringen des Kern-Schale-Präpolymers mit wenigstens einer Base in einer Menge, die geeignet ist, mindestens 50% der Carboxyl-Gruppen zu neutralisieren, und mit Wasser in beliebiger Reihenfolge zum Erhalt einer wässrigen Dispersion des zumindest teil-neutralisierten Kern-Schale-Präpolymers;
Nachdem in Schritt c) die freie Carboxyl-Gruppe mit einer Base, vorzugsweise mit einem sekundären oder tertiären Amin, z.B. Triethylamin neutralisiert und das Kern-Schale-Präpolymer in Wasser dispergiert wurde, wird mit einem geeigneten Kettenverlängerungsmittel in Schritt d) wie Aminen, Hydrazinen und/ oder ähnlichen Kettenverlängerungsmitteln umgesetzt.

Die Neutralisation in Schritt c) erfolgt vorzugsweise bei Temperaturen unterhalb des Siedepunktes der Zusammensetzung und des Neutralisationsmittels. Nach Schritt c) wird das zumindest teil-neutralisierte Kern-Schale-Präpolymer erhalten. Schritt c) ist optional, wenn als vierte Alkohol nur solche Alkohole mit mindestens zwei Hydroxyl-Gruppen und mit neutralisierter Sulfonat-Gruppe eingesetzt werden.

Als Monomere für die Kettenverlängerung in Schritt d) nach der Dispergierung des Präpolymers in Wasser werden bevorzugt di- und mehrfunktionelle wasserlösliche Alkohole, Amine und Aminoalkohole eingesetzt, die mit den freien Isocyanatgruppen des in Wasser dispergierten Präpolymers zu Harnstoffgruppen bzw. Urethangruppen umgesetzt werden.

Bevorzugt werden Diamine wie Ethylendiamin oder Triamine wie Diethylentriamin eingesetzt, prinzipiell denkbar sind auch Diaminoverbindungen mit einem längeren Kohlenstoffgerüst. Die Dispergierung kann vorzugsweise bei Temperaturen von 10 bis 40°C erfolgen.

Die Säurezahl des Kern-Schale-Polymers und / oder des Polyurethans beträgt z.B. von 5 bis 30 mg KOH/g, vorzugsweise von 8 bis 24 mg KOH/g und besonders bevorzugt 10-20 mg KOH/g. Die Säurezahl wird nach DIN EN ISO 2114 bestimmt.

Die Herstellung des Polyurethans erfolgt vorzugsweise nach dem sogenannten "Acetonprozess". Hierzu wird während der ersten und zweiten Umsetzung ein organisches Lösungsmittel eingesetzt, insbesondere zumindest während der zweiten Umsetzung, z.B. Aceton oder MEK. Das Lösungsmittel kann auch als Lösungsvermittler und zur Reduzierung der Viskosität dienen. Für den "Acetonprozess" ist typisch, dass das Lösungsmittel nach der Kettenverlängerung (Schritt d) wieder entfernt wird, vorzugsweise durch Destillation im Unterdruck.

Es ist aber nach einer Ausführungsform der Erfindung gewünscht, das Lösungsmittel vollständig oder zumindest teilweise in dem wässrigen Polyurethan beizubehalten, zumindest aber zu weniger als 50 Gew.% (bezogen auf die ursprünglich eingesetzte Menge) zu entfernen. Dies verbessert die Trocknungseigenschaften eines mit dem Bindemittel hergestellten Lackes. Im Unterschied zum Stand der Technik wird nach Herstellung der fertigen Polyurethan-Dispersion das Lösungsmittel dann nicht oder nur anteilig abdestilliert.

Somit liegt die erfindungsgemäße Polyurethan-Dispersion, vorliegend als Hybrid in einem Wasser/Lösungsmittel-Gemisch vor. Der Anteil des Lösungsmittels, insbesondere MEK, kann dann zwischen 1 und 30 Gew.%, insbesondere 5 und 20 Gew.%, der fertigen Polyurethan-Dispersion betragen.

Die Anwesenheit des Lösungsmittels in der fertigen Dispersion führt zu einer verbesserten, d.h. schnelleren Filmbildung des Polymers und damit zu einer frühen Chemikalienbeständigkeit der Beschichtung. Würde man dagegen gemäß Stand der Technik die entsprechende Menge an Lösungsmittel zu der üblicherweise weitgehend lösungsmittelfreien Polyurethan-Dispersion in vergleichbaren Konzentrationen nachträglich zugeben, so führt dies zu einer Quellung der Polymerdispersion und damit zu einer Instabilität des Systems, zumindest über die Zeit.

Die erfindungsgemäße Vorgehensweise nach einer Ausführungsform führt zu einer lösungsmittelhaltigen Polyurethan-Dispersion, die, bedingt durch die Anwesenheit des Lösungsmittels in der Dispersion und damit in einer daraus hergestellten Formulierung in Form eines Lacks, bei Raumtemperatur und insbesondere bei erhöhten Temperaturen deutlich schneller zur Filmbildung und einer klebfreien Oberfläche führt als bei gebräuchlichen, nahezu lösungsmittelfreien Polyurethan-Dispersionen. Das Trocknungsverhalten dieser neuartigen Polyurethan-Dispersionen bzw. der daraus erhältlichen Lacke ist, bedingt durch die Anwesenheit des Lösungsmittels, durchaus mit konventionellen lösungsmittelhaltigen Polymeren vergleichbar, so dass die Verarbeitungsbedingungen bei der Applikation im Übergang von lösungsmittelhaltiger Beschichtung auf wässrige Beschichtung seitens der Anlagentechnik kaum verändert werden müssen, hierbei aber erhebliche Lösungsmittelmengen als VOC-Emissionen eingespart werden können. Im Gegensatz zu lösungsmittelhaltigen Systemen können diese neuartigen wässrigen Polyurethan-Dispersionen enthaltend etwas Lösungsmittel aus verarbeitungstechnischen Gründen auch mit Wasser anstelle mit organischen Lösungsmitteln verdünnt werden.

Somit leisten die Polyurethandispersionen, hergestellt nach dieser Ausgestaltung der Erfindung, einen Beitrag zur Reduzierung des VOC-Gehaltes von Lacken gegenüber herkömmlichen Lacken, wo das Bindemittel in einem organischen Lösungsmittel gelöst ist und das organische Lösungsmittel bis zu 90 Gew.% des Lackes ausmachen kann.

Die wässrige Dispersion des Polyurethans weist vorzugsweise einen Festkörper von 10 bis 60 Gew.%, bevorzugt von 25 bis 50 Gew.-% bestimmt nach DIN EN ISO 3251 auf.

Die Polyurethan-Dispersionen können als alleiniges Bindemittel aber auch in Ko mbination mit anionisch stabilisierten Acrylatdispersionen und weiteren anionisch oder anionisch/nicht-ionisch oder ausschließlich nicht-ionisch stabilisierten Polyure-thandispersionen und anderen geeigneten Bindemitteln zur Herstellung von Lacken verwendet werden.

### Beispiel A (erfindungsgemäß)

In einem Einliter-Dreihalskolben, ausgestattet mit KPG-Rührwerk, Tropftrichter, Stickstoffeinleitungsrohr und Rückflußkühler, wurden 498 g eines Polycarbonatdiols des Molgewichtes MW=1000 (basierend auf 1,6-Hexandiol), 20 g eines Polycarbonatdiols des Molgewichtes MW=500 (Polycarbonatdiol basierend auf 1,6-Hexandiol und 1,5-Pentandiol) und 18 g 1,3-Propandiol mit Polyethylenglykolether-Seitenkette in 300 g Methylethylketon (MEK) vorgelegt, auf 60°C erwärmt und im Vakuum entwässert. Bei dieser Reaktionstemperatur wurden unter Rühren 80 g 1-Isocyanato-3,5,5-trimethyl-5-isocyanatomethylcyclohexan und 100 g 1,4-Diisocyanatocyclohexan über 20 min unter Rühren und Stickstoffeinleitung zugetropft und nach Ende der Zugabe die Reaktionstemperatur auf 75-80 °C erhöht. Die Reaktionsmischung wurde solange gerührt bis der NCO-Gehalt (bestimmt per Titration nach DIN 53185) 3,7-3,8% beträgt. Dann wurde die Reaktionsmischung auf 70°C abgekühlt und 27 g Dimethylolpropionsäure zugegeben und gut eingerührt. Die Reaktionstemperatur wird wieder auf 80°C erhöht und solange gerührt, bis der NCO-Gehalt (bestimmt per Titration nach DIN 53185) 2,1-2,2 Gew.% beträgt. Die Reaktionsmischung wird auf 70°C abgekühlt und unter kräftigem Rühren 19 g Triethylamin eingerührt und mindestens 10 min homogenisiert. Danach wurde die neutralisierte Präpolymerlösung in 1250 g Wasser unter Kühlung dispergiert und sofort danach 10,5 g Ethylendiamin in 50 g Wasser dazugegeben. Nach weiteren 60 min Rühren bei 25°C war der verbliebene NCO-Gehalt auf unter 0,1 Gew.% abgefallen.

Ein Teil der MEK-haltigen Dispersion (Produkt A1) wurde nach Filtration über 50 µm in dieser Form eingesetzt.

Ein anderer Teil der Dispersion (Produkt A2) wurde bei 55-65°C und einem Unterdruck von 200-400 mbar solange destilliert, bis der verbleibende MEK-Gehalt (per Gaschromatographie bestimmt) unter 0,5 % gefallen war. Die fertige Dispersion wurde abgekühlt und über 50 µm filtriert.

Die Kenndaten für A1 bzw. A2 lauten:

| | A1 | A2 |
|---|---|---|
| nichtflüchtiger Anteil (1g/1h/125°C Umluftofen/ohne LSM) nach DIN EN ISO 3251: | 32,6% | 39,6% |
| pH-Wert (unverdünnt gemessen mit Kapillarelektrode) nach DIN ISO 976: | 7,1 | 7,0 |
| Viskosität (Rotation mit Haake VT 550 bei 20°C/D=444,6 1/s nach DIN ISO 2884-1 : | 17 mPas | 30 mPas |
| Teilchengröße: | 72 nm | 73 nm |

### Beispiel B (Vergleich, ohne ersten und dritten Alkohol des Anspruchs 1)

In einem Einliter-Dreihalskolben, ausgestattet mit KPG-Rührwerk, Tropftrichter, Stickstoffeinleitungsrohr und Rückflußkühler, wurden 890 g eines Polycarbonatdiols (der zweite Alkohol des Anspruchs 1) des Molgewichtes MW=1000 und 41,7 g Dimethylolpropionsäure (der vierte Alkohol des Anspruchs 1) in 420 g Aceton vorgelegt, homogenisiert und auf 60°C erwärmt. Bei dieser Reaktionstemperatur wurden 219,4 g 1-Isocyanato-3,5,5-trimethyl-5-isocyanatomethylcyclohexan und 47,7 g 1,6-Hexamethylendiisocyanat über 20 min unter Rühren und Stickstoffeinleitung zugetropft und nach Ende der Zugabe die Reaktionstemperatur auf 70°C erhöht. Die Reaktionsmischung wurde solange gerührt, bis der NCO-Gehalt (bestimmt per Titration nach DIN 53185) 2,5-2,7% beträgt. Dann wurde die Reaktionsmischung auf 60°C abgekühlt und 29,1 g Triethylamin gut eingerührt. Danach wurde die neutralisierte Präpolymerlösung in 1725 g Wasser unter Kühlung dispergiert und sofort danach 21,1 g Ethylendiamin in 70 g Wasser dazugegeben. Nach weiteren 60 min Rühren bei 25°C war der verbliebene NCO-Gehalt auf unter 0,1 Gew.% abgefallen.

Die entstehende Dispersion wurde bei 55-65°C und einem Unterdruck von 200-400 mbar solange destilliert, bis der verbleibende Acetongehalt (per Gaschromatographie bestimmt) unter 0,5% gefallen war. Die fertige Dispersion wurde abgekühlt und über 50 µm filtriert.

Die Kenndaten für B lauten:

| | |
|---|---|
| Nichtflüchtiger Anteil (1g/1h/125°C Umluftofen/ohne LSM): | 39,5% nach DIN EN ISO 3251 |
| pH-Wert (unverdünnt gemessen mit Kapillarelektrode): | 7,5 nach DIN ISO 976 |
| Viskosität (Rotation mit Haake VT 550 bei 20°C/D=444,6 1/s) : | 138 mPas nach DIN ISO 2884-1 |
| Teilchengröße: | 71 nm |

### Herstellung von Lacken:

### Eingesetzt wurden folgende Rohstoffe:

| Wasser | demineralisiert |
|---|---|
| Acrysol RM 8W | Polyurethanverdicker; DOW, nicht-ionisches lösungsmittelfreies, hydrophob modifiziertes Ethylenoxid-Urethan |
| Aquacer 513 | Wachsdispersion; BYK; Wachsemulsion auf Basis von HDPE |
| Byk 333 | silikonhaltiges Oberflächenadditiv; BYK; polyethermodifiziertes Polydimethylsiloxan |
| Byk 346 | Untergrundbenetzer; BYK; polyethermodifizierten Siloxan |
| Tego Foamex 800 | Entschäumer; EVONIK; Emulsion eines Polyethersiloxan-Copolymers, enthält Kieselsäure |
| FoamStar SI 2292NC | Entschäumer; BASF; Octamethyl-Cyclotetrasiloxane, in 2-Butoxyethanol |
| Carbodilite E-02 | Polycarbodiimid; NISSHINBO |

| | |
|---|---|
| Lacktyp: | Einkomponenten- (1K) und Zweikomponenten- (2K) Klarlack, farblos |
| Bindemittel: | Bindemittel A1 aus Beispiel A (erfindungsgemäß) |
| | Bindemittel B aus Beispiel B (Vergleich) |

| Pos. | | A1 (1K) | A1 (2K) | B (1K) | B (2K) |
|---|---|---|---|---|---|
| 1 | Wasser | 8,6 | 8,6 | 8,6 | 8,6 |
| 2 | Acrysol RM 8W (1:5 H₂O) | 2,5 | 2,5 | 2,5 | 2,5 |
| 3 | Aquacer 513 | 2,5 | 2,5 | 2,5 | 2,5 |
| 4 | Byk 333 | 0,3 | 0,3 | 0,3 | 0,3 |
| 5 | Byk 346 | 0,3 | 0,3 | 0,3 | 0,3 |
| 6 | Tego Foamex 800 (1:1 H₂O) | 0,3 | 0,3 | 0,3 | 0,3 |
| 7 | FoamStar SI 2292NC | 0,5 | 0,5 | 0,5 | 0,5 |
| | | 15,0 | 15,0 | 15,0 | 15,0 |

| *15min. dispergieren (Zahnscheibe)* | | | | | |
|---|---|---|---|---|---|
| 8 | Bindemittel A1 | 85,0 | 85,0 | | |
| 9 | Bindemittel B | | | 85,0 | 85,0 |
| | | 100,0 | 100,0 | 100,0 | 100,0 |

| *15min. dispergieren (Zahnscheibe)* | | | | | |
|---|---|---|---|---|---|
| 10 | Carbodilite E-02 40%ig | | 7,5 | | 7,5 |

| **Stammlack** | | | | | |
|---|---|---|---|---|---|
| pH-Wert 23°C | | 7,5 | 7,5 | 7,6 | 7,6 |

Die oben genannten Lackrohstoffe wurden in der Reihenfolge 1-7 in einem geeigneten Becher eingewogen und dann mit einem Pendraulik Labordissolver mittels einer Zahnscheibe (Durchmesser 50mm) auf Stufe 3 (1400 Umdrehungen/Minute) 15 Minuten lang dispergiert. Dann wurden Position 8 bzw. 9 zugegeben und erneut 15 Minuten dispergiert, allerdings auf Stufe 2 (930 Umdrehungen/Minute).

Der Stamm-Lack war jetzt fertig gestellt, wurde aber für weitere Prüfungen 16h bei Raumtemperatur stehengelassen, damit sich pH-Wert und Viskosität auf einen "Endzustand" einstellen konnten. Dies bedeutet, dass die Werte auch nach mehreren Tagen sich nur minimal (< 5% Abweichung) von den Prüfwerten nach einem Tag unterschieden.

Kurz vor den Lackausprüfungen wurde dem Stammlack für seine Prüfung als Zwei-Komponenten-Lack der Vernetzer Carbodilite E-02 (aus Pos. 10) zugegeben und 5 Minuten mit der oben erwähnten Zahnscheibe und dem Dissolver auf Stufe 1 (465 Umdrehungen/Minute) dispergiert.

Da man für die Ausprüfung der Lacke ca. 150g fertigen Lack benötigt, wurden die Positionen 1-7 in 7,5 facher Menge in einen PE-Becher (350ml Fassungsvermögen) eingewogen und wie beschrieben dispergiert. Dann wurden davon 22,5 g auf die 4 Lackansätze verteilt und von den Positionen 8 + 9 wurden jetzt 122,5 g auf die dispergierten Positionen 1-7 zugegeben. Zum Erhalt der 2K Lacke wurden noch 11,25 g Vernetzer (Pos. 10) zugegeben.

| **Stahlblechprüfung** | | | | |
|---|---|---|---|---|
| 60µm Aufzug auf Stahlblech Fa. Krüppel (0,75mm Dicke, doppelt dekapiert); 1 Min bei RT, danach 5 min bei 120°C, abkühlen auf RT | | | | |
| Pendelhärte nach König (DIN 53157) | | | | |
| Pendelhärte (König) sofort [s] | 34 | 34 | 30 | 28 |
| Pendelhärte (König) nach 7d [s] | 38 | 34 | 30 | 32 |

| Beständigkeiten: **Tropfen Wasser demin.** auf Stahlblech | | | | |
|---|---|---|---|---|
| Einwirkzeit 15 min | 0,5 | 0,5 | 1 | 1 |
| Einwirkzeit 30 min | 0,5 | 0,5 | 1 | 1 |
| Einwirkzeit 60 min | 0,5 | 0,5 | 1,5 | 1,5 |
| Einwirkzeit 1h Regeneration | 0 | 0 | 0,5 | 0,5 |

| Beständigkeiten: **Tropfen Ethanol 48%** auf Stahlblech | | | | |
|---|---|---|---|---|
| Einwirkzeit 15 min | 2 | 1 | 3 | 2,5 |
| Einwirkzeit 30 min | 2 | 1 | 3 | 2,5 |
| Einwirkzeit 60 min | 2 | 1,5 | 3,5 | 2,5 |
| Einwirkzeit 1h Regeneration | 1 | 0 | 0,5 | 0,5 |
| | | | | |
| | | | | |
| | | | | |

| **Temperaturgradient 60-160°C** | | | | |
|---|---|---|---|---|
| 60 µm Aufzug auf Gradientenblech der Fa. Erichsen; 10 min bei RT;20 min auf 60°C und 160°C; 30 min abkühlen auf RT | | | | |
| **Glanz bei 60°C (DIN EN ISO 2813)** | | | | |
| Glanz niedrigste Temp: 20° | 31 | 28 | 32 | 30 |
| Glanz niedrigste Temp: 60° | 82 | 76 | 81 | 82 |
| Glanz niedrigste Temp: 85° | 80 | 75 | 82 | 80 |
| . | | | | |

| **Glanz bei 160°C(DIN EN ISO 2813)** | | | | |
|---|---|---|---|---|
| Glanz höchste Temp: 20° | 44 | 40 | 66 | 21 |
| Glanz höchste Temp: 60° | 94 | 92 | 101 | 62 |
| Glanz höchste Temp: 85° | 88 | 85 | 95 | 60 |
| | | | | |

| **Gradient 60-160°C** | | | | |
|---|---|---|---|---|
| 60µm Aufzug auf Gradientenblech der Fa. Erichsen; 10 RT;120 sec bei 80, 100, 120, 140 und 160°C; Abkühlen auf RT danach Tropfen Beständigkeit | | | | |
| dem. Wasser 1h | | | | |
| 80°C | 1,5 | 1,5 | 1 | 1,5 |
| 100°C | 1 | 1 | 1 | 1 |
| 120°C | 0,5 | 0,5 | 1 | 1 |
| 140°C | 0,5 | 0 | 0,5 | 1 |
| 160°C | 0 | 0 | 0,5 | 1 |

| Beständigkeit Ethanol 48% 1h | | | | |
|---|---|---|---|---|
| 80°C | 2,5 | 2 | 3 | 2 |
| 100°C | 2,5 | 1 | 3 | 1 |
| 120°C | 2 | 1 | 3 | 1 |
| 140°C | 1,5 | 1 | 3 | 1 |
| 160°C | 1 | 0 | 3 | 1 |

| | |
|---|---|
| Bewertung: | 0 --> sehr gut (keine Veränderung des Filmes gegenüber unbelasteter Oberfläche) |
| | 5 --> sehr schlecht (starke Veränderung der Oberfläche bis zerstörte Oberfläche des Filmes |

Weiterhin wurde die Trocknung untersucht, wobei ein 90 µm Naßfilmaufzug auf einer Glasoberfläche aufgebracht wurde. Die Trocknung wurde in einem Klimaraum bei 23°C und 60% rel. Feuchte durchgeführt. A1 war um ca. 30% schneller trocken als A2 und B bei Raumtemperatur (Fingertest auf Klebfreiheit). A1 (1K) war nach 20 Minuten klebfrei, A2 (1K) und B (1K) nach 30 min. Ein Trocknungsvergleich der Lacke A1 (1K), A2 (1K) und B (1K) zeigte, dass sich A2 (1K) und B (1K) in ihrem physikalischem Trocknungsverhalten bei Raumtemperatur gleich verhielten, wogegen A1 (1K) bedingt durch den MEK-Anteil eine schnellere physikalische Antrocknung als A2 (1K) und B (1K) zeigte.

Eine schnellere physikalische Trocknung bedeutet aber auch, dass die Reaktionspartner eines 2K-Lackes sich schneller finden. Bei gleichen Trocknungstemperaturen verkürzen sich also die Aushärtungszeiten, bzw. es kann bei gleichen Trocknungszeiten, bedingt durch die Länge eines Durchlauf-Ofens bei gleicher Bandgeschwindigkeit oder der Taktung der Produktion, mit geringeren Trocknungs-/ Einbrenn-Temperaturen gearbeitet werden.

Der mit A1 hergestellte Lack hat also gegenüber konventionellen Lacken nicht nur einen Vorteil durch geringeren VOC-Anteil, sondern ist auch in der Trocknung energetisch günstiger als ein Lack hergestellt mit Bindemittel B.

Die Lackergebnisse (siehe oben) sind für pH-Wert und Pendelhärte mit Bindemittel A1 und B erwartungsgemäß ähnlich. Bei den für Einbrennlacken sehr kurz gewählten Trocknungsbedingungen von 1 Minute Raumtemperatur (RT) und 5 Minuten bei 120°C zeigte sich aber bei dem Tropfenversuch der Vorteil von A1 (1K) und A1 (2K) gegenüber B (1K) und (2K). Sowohl im 1K-Lack wie auch im Besonderen im 2K-Lack wurden bessere Werte erzielt.

Beim Einbrenntest im Gradientenofen über einen Temperaturbereich von 60-160°C wurde überraschend im 2K-Lack kein Glanzverlust bei Bindemittel A1 (2K) bei 60°C und 160°C Trocknungstemperatur erhalten. Die Lacke sind also unempfindlicher gegenüber hohen Einbrenntemperaturen in A1 (2K) als in B (2K).

Bei den extrem verkürzten Einbrennbedingungen 10 RT;120" 60-160°C; 30 RT wurden für Bindemittel A sowohl im Wasserbeständigkeitstest als auch in der Ethanolbeständigkeit bessere Werte als für Bindemittel B erzielt.

## Patentansprüche

1. Verfahren zur Herstellung einer wässrigen Polyurethan-Dispersion umfassend zumindest die folgenden Schritte:
a) Herstellung eines Präpolymers durch Umsetzung von
- Alkoholen mit
- Isocyanaten mit im Mittel mindestens zwei Isocyanatgruppen pro Molekül, wobei die Alkohole zumindest einen ersten, einen zweiten und einen dritten Alkohol umfassen,
- der erste, der zweite und der dritte Alkohol im Mittel jeweils mindestens zwei Hydroxyl-Gruppen pro Molekül aufweist,
- der erste, der zweite und der dritte Alkohol jeweils unterschiedlich ist,
- der erste Alkohol zumindest eine Polyalkylenglykolether-Seitengruppe aufweist,
- der zweite und dritte Alkohol jeweils keine Polyalkylenglykolether-Seitengruppe aufweist,
- wobei der zweite Alkohol ein mittleres Molekulargewicht als Zahlenmittel von 700 bis 5000 g/mol aufweist,
- wobei der dritte Alkohol ein um mindestens 30% niedrigeres mittleres Molekulargewicht als Zahlenmittel als der zweite Alkohol aufweist,
wobei die Summe der eingesetzten Isocyanate und die Summe der eingesetzten Alkohole ein NCO/OH -Verhältnis von größer 1,1 : 1 bis 2,5 : 1 aufweisen;
b) Umsetzung des Präpolymers mit freien Isocyanatgruppen mit zumindest einem vierten Alkohol und ggf. Zusatz weiterer Isocyanate,
wobei der vierte Alkohol mindestens zwei Hydroxyl-Gruppen und mindestens eine Carboxyl-Gruppe (-COOH) oder mindestens eine neutralisierte Sulfonat-Gruppe (-SO₃⁻) pro Molekül aufweist oder der vierte Alkohol beides ist, zum Erhalt eines Kern-Schale-Präpolymers;
c) wenn der vierte Alkohol zumindest teilweise ein Alkohol mit mindestens zwei Hydroxyl-Gruppen und mindestens einer Carboxyl-Gruppe (-COOH) ist, zusammenbringen des Kern-Schale-Präpolymers mit wenigstens einer Base in einer Menge, die geeignet ist, mindestens 50% der Carboxyl-Gruppen zu neutralisieren, und Wasser in beliebiger Reihenfolge zum Erhalt einer wässrigen Dispersion des zumindest teil-neutralisierten Kern-Schale- Präpolymers;
d) Kettenverlängerung des zumindest teil-neutralisierten Kern-Schale-Präpolymers in wässriger Dispersion mit Di- oder Polyaminen und/oder fünften wasserlöslichen Alkoholen mit im Mittel jeweils mindestens zwei Hydroxylgruppen pro Molekül oder Aminoalkoholen zum Erhalt eines Polyurethans in wässriger Dispersion.

2. Verfahren nach Anspruch 1, wobei die Polyalkylenglykolether-Seitengruppe des ersten Alkohols mehrere Alkylenoxideinheiten umfasst, vorzugsweise im Mittel 5 bis 70, besonders bevorzugt im Mittel 7 bis 55 Alkylenoxideinheiten pro Molekül und die Alkylenoxideinheiten vorzugsweise zu mehr als 50% Ethylenoxideinheiten sind und besonders bevorzugt zu 100% Ethylenoxideinheiten.

3. Verfahren nach Anspruch 1 oder 2, wobei der zweite Alkohol und der dritte Alkohol ausgewählt sind aus der Gruppe bestehend aus Polymeren oder Copolymeren mit Ether-, Ester und/oder Carbonat-Verknüpfung, Polyetherpolyolen, Polyesterpolyolen, und/oder Polycarbonatpolyolen oder deren Mischungen, wobei vorzugsweise der zweite und ggf. der dritte Alkohol Polycarbonat-Gruppen aufweist und besonders bevorzugt der zweite und der dritte Alkohol ein Polycarbonatpolyol ist.

4. Verfahren nach zumindest einem der vorherigen Ansprüche, wobei der vierte Alkohol ein Molekulargewicht von 100 bis 500 g/mol aufweist und vorzugsweise 2,2-Bis(hydroxymethyl)butansäure und/oder 2,2-Bis(hydroxymethyl)propionsäure ist.

5. Verfahren nach zumindest einem der vorherigen Ansprüche, wobei das Isocyanat, insbesondere das Isocyanat in Schritt b), ein aliphatisches Isocyanat ist, vorzugsweise ausgewählt aus einem oder mehreren Mitgliedern der Gruppe bestehend aus: 1,6-Hexamethylendiisocyanat, 1,4-Diisocyanatocyclohexan, 1-Iso-cyanato-3,5,5-trimethyl-5-isocyanatomethylcyclohexan und Tetramethylxylylendiisocyanat.

6. Verfahren nach zumindest einem der vorherigen Ansprüche, wobei der erste, zweite, und dritte Alkohol als Mischung mit den Isocyanaten umgesetzt wird.

7. Verfahren nach zumindest einem der vorherigen Ansprüche, wobei die Umsetzung des ersten Präpolymers mit zumindest dem vierten Alkohol in Schritt b) die Zugabe von weiteren Isocyanaten mit im Mittel mindestens zwei Isocyanatgruppen pro Molekül umfasst.

8. Verfahren nach zumindest einem der vorherigen Ansprüche, wobei zusätzlich zu den Alkoholen in Schritt a) oder dem vierten Alkohol in Schritt b) ein oder mehrere Monoalkohole in Schritt a) und/oder Schritt b) eingesetzt werden, die jeweils zumindest eine Doppelbindung aufweisen, vorzugsweise Hydroxyethylacrylat und/oder Hydroxymethylacrylat.

9. Verfahren nach zumindest einem der vorherigen Ansprüche, wobei in Schritt b) oder in Schritt a) und Schritt b) ein organisches Lösemittel eingesetzt wird, vorzugsweise ausgewählt aus einem oder mehreren Mitgliedern der Gruppe: Aceton, Methylethylketon, Dimethylsulfoxid und/oder N.N'-Dimethylformamid, besonders bevorzugt Aceton und/oder Methylethylketon.

10. Verfahren nach Anspruch 9, wobei das organische Lösemittel in der wässrigen Dispersion des Polyurethans mit 1 bis 30 Gew.%. vorzugsweise 1,5 bis 15 Gew.% enthalten ist.

11. Verfahren nach zumindest einem der vorherigen Ansprüche, wobei die Schritte a) und b) bei einer Temperatur von 40 bis 90°C, bevorzugt bei 50 bis 80°C durchgeführt werden.

12. Verfahren nach zumindest einem der vorherigen Ansprüche, wobei die Säurezahl des Kern-Schale-Polymers und / oder des Polyurethans von 5 bis 30 mg KOH/g, vorzugsweise 8 bis 24 mg KOH/g und besonders bevorzugt 10-20 mg KOH/g beträgt.

13. Verfahren nach zumindest einem der vorherigen Ansprüche, wobei die wässrige Dispersion des Polyurethans 10 bis 60 Gew.%, bevorzugt 25 bis 50 Gew.-% Festkörper nach DIN EN ISO 3251 aufweist.

14. Verfahren nach zumindest einem der vorherigen Ansprüche, wobei die Base ein sekundäres und/oder ein tertiäres Amin ist, bevorzugt Triethylamin (TEA) oder Dimethylethanolamin (DMEA).

15. Verfahren nach zumindest einem der vorherigen Ansprüche, wobei das Präpolymer einen NCO-Gehalt von 2 bis 8 Gew.%, vorzugsweise 3 bis 7 Gew.%, , und/oder das Kern-Schale-Präpolymer einen NCO-Gehalt von 0,5 bis 5 Gew.%, vorzugsweise 0,5 bis 2,9 Gew.%, aufweist.

16. Wässrige Polyurethan-Dispersion, vorzugsweise als Bindemittel für einen Lack, herstellbar mittels eines Verfahrens gemäß einem der Ansprüche 1 bis 15, ggf. unter weiterer Verdünnung mit Wasser und/oder Lösungsmitteln und ggf. Netzmitteln und/oder Entschäumern.

17. Lack, insbesondere Klarlack, umfassend neben der wässrigen PU-Dispersion nach Anspruch 16 als Bindemittel zumindest einen Härter, wobei der Härter ausgewählt ist aus einem oder mehreren Mitgliedern der Gruppe bestehend aus Polyisocyanaten, einschließlich blockierten Polyisocyanaten, Polycarbodiimiden, Polyaziridinen und /oder Triazinverbindungen.

18. Oberfläche beschichtet mit dem Lack nach Anspruch 17, wobei die Oberfläche aus Holz, Textil, Leder, Kunststoff, Metall und/oder einem mineralischen Werkstoff besteht.

## Claims

1. Process for producing an aqueous polyurethane dispersion comprising at least the following steps:
a) preparing a prepolymer by reacting
- alcohols with
- isocyanates having on average at least two isocyanate groups per molecule, wherein the alcohols comprise at least a first, a second and a third alcohol,
- the first, the second and the third alcohol each have on average at least two hydroxyl groups per molecule,
- the first, the second and the third alcohol are each different,
- the first alcohol has at least one polyalkylene glycol ether side group,
- the second and third alcohol each have no polyalkylene glycol ether side group,
- wherein the second alcohol has a number-average molecular weight of 700 to 5000 g/mol,
- wherein the third alcohol has a number-average molecular weight that is at least 30% lower than that of the second alcohol,
wherein the sum of the isocyanates used and the sum of the alcohols used have an NCO/OH ratio of greater than 1.1:1 to 2.5:1;
b) reacting the prepolymer having free isocyanate groups with at least one fourth alcohol and optionally adding further isocyanates,
wherein the fourth alcohol has at least two hydroxyl groups and at least one carboxyl group (-COOH) or at least one neutralised sulfonate group (-SO₃⁻) per molecule, or the fourth alcohol has both,
to obtain a core-shell prepolymer;
c) if the fourth alcohol is at least partly an alcohol having at least two hydroxyl groups and at least one carboxyl group (-COOH), bringing the core-shell prepolymer into contact with at least one base in an amount suitable for neutralising at least 50% of the carboxyl groups, and water in any order, to obtain an aqueous dispersion of the at least partially neutralised core-shell prepolymer;
d) chain-extending the at least partially neutralised core-shell prepolymer in aqueous dispersion with di- or polyamines and/or fifth water-soluble alcohols having on average each at least two hydroxyl groups per molecule or amino alcohols to obtain a polyurethane in aqueous dispersion.

2. Process according to claim 1, wherein the polyalkylene glycol ether side group of the first alcohol comprises several alkylene oxide units, preferably on average 5 to 70, particularly preferably on average 7 to 55 alkylene oxide units per molecule, and the alkylene oxide units are preferably more than 50% ethylene oxide units and particularly preferably 100% ethylene oxide units.

3. Process according to claim 1 or 2, wherein the second alcohol and the third alcohol are selected from the group consisting of polymers or copolymers having ether, ester and/or carbonate linkages, polyether polyols, polyester polyols, and/or polycarbonate polyols or mixtures thereof, wherein preferably the second and optionally the third alcohol has polycarbonate groups and particularly preferably the second and the third alcohol are polycarbonate polyols.

4. Process according to at least one of the preceding claims, wherein the fourth alcohol has a molecular weight of 100 to 500 g/mol and is preferably 2,2-bis(hydroxymethyl)butanoic acid and/or 2,2-bis(hydroxymethyl)propionic acid.

5. Process according to at least one of the preceding claims, wherein the isocyanate, in particular the isocyanate in step b), is an aliphatic isocyanate, preferably selected from one or more members of the group consisting of: 1,6-hexamethylene diisocyanate, 1,4-diisocyanatocyclohexane, 1-isocyanato-3,5,5-trimethyl-5-isocyanatomethylcyclohexane and tetramethylxylylene diisocyanate.

6. Process according to at least one of the preceding claims, wherein the first, second and third alcohol are reacted with the isocyanates as a mixture.

7. Process according to at least one of the preceding claims, wherein the reaction of the first prepolymer with at least the fourth alcohol in step b) comprises the addition of further isocyanates having on average at least two isocyanate groups per molecule.

8. Process according to at least one of the preceding claims, wherein, in addition to the alcohols in step a) or the fourth alcohol in step b), one or more monoalcohols are used in step a) and/or step b), each having at least one double bond, preferably hydroxyethyl acrylate and/or hydroxymethyl acrylate.

9. Process according to at least one of the preceding claims, wherein an organic solvent is used in step b) or in step a) and step b), preferably selected from one or more members of the group: acetone, methyl ethyl ketone, dimethyl sulfoxide and/or N,N'-dimethylformamide, particularly preferably acetone and/or methyl ethyl ketone.

10. Process according to claim 9, wherein the organic solvent is present in the aqueous dispersion of the polyurethane in an amount of 1 to 30 wt.%, preferably 1.5 to 15 wt.%.

11. Process according to at least one of the preceding claims, wherein steps a) and b) are carried out at a temperature of 40 to 90°C, preferably at 50 to 80°C.

12. Process according to at least one of the preceding claims, wherein the acid number of the core-shell polymer and/or of the polyurethane is from 5 to 30 mg KOH/g, preferably from 8 to 24 mg KOH/g and particularly preferably 10 to 20 mg KOH/g.

13. Process according to at least one of the preceding claims, wherein the aqueous dispersion of the polyurethane has a solids content of 10 to 60 wt.%, preferably 25 to 50 wt.%, according to DIN EN ISO 3251.

14. Process according to at least one of the preceding claims, wherein the base is a secondary and/or a tertiary amine, preferably triethylamine (TEA) or dimethylethanolamine (DMEA).

15. Process according to at least one of the preceding claims, wherein the prepolymer has an NCO content of 2 to 8 wt.%, preferably 3 to 7 wt.%, and/or the core-shell prepolymer has an NCO content of 0.5 to 5 wt.%, preferably 0.5 to 2.9 wt.%.

16. Aqueous polyurethane dispersion, preferably as a binder for a coating composition, obtainable by a process according to any one of claims 1 to 15, optionally with further dilution with water and/or solvents and optionally wetting agents and/or defoamers.

17. Coating composition, in particular clearcoat, comprising, in addition to the aqueous PU dispersion according to claim 16 as binder, at least one curing agent, wherein the curing agent is selected from one or more members of the group consisting of polyisocyanates, including blocked polyisocyanates, polycarbodiimides, polyaziridines and/or triazine compounds.

18. Surface coated with the coating composition according to claim 17, wherein the surface consists of wood, textile, leather, plastic, metal and/or a mineral material.

## Revendications

1. - Procédé de préparation d'une dispersion aqueuse de polyuréthane comportant au moins les étapes suivantes :
a) préparation d'un prépolymère par réaction
- d'alcools avec
- des isocyanates ayant en moyenne au moins deux groupes isocyanate par molécule, les alcools comportant au moins un premier, un deuxième et un troisième alcool ;
- le premier, le deuxième et le troisième alcool présentent en moyenne chacun au moins deux groupes hydroxyle par molécule ;
- le premier, le deuxième et le troisième alcool sont tous différents ;
- le premier alcool présente au moins un groupe latéral polyalkylèneglycoléther ;
- aucun du deuxième et du troisième alcool ne présente de groupe latéral polyalkylèneglycoléther ;
- le deuxième alcool présentant une masse moléculaire moyenne en nombre de 700 à 5 000 g/mol ;
- le troisième alcool présentant une masse moléculaire moyenne en nombre inférieure d'au moins 30 % à celle du deuxième alcool ;
la somme des isocyanates utilisés et la somme des alcools utilisés présentant un rapport NCO/OH de plus de 1,1:1 à 2,5:1 ;
b) réaction du prépolymère ayant des groupes isocyanate libres avec au moins un quatrième alcool et, le cas échéant, addition d'autres isocyanates ;
le quatrième alcool présentant au moins deux groupes hydroxyle et au moins un groupe carboxyle (-COOH) ou au moins un groupe sulfonate neutralisé (-SO₃⁻) par molécule, ou le quatrième alcool présentant les deux à la fois,
afin d'obtenir un prépolymère cœur-écorce ;
c) lorsque le quatrième alcool est au moins en partie un alcool ayant au moins deux groupes hydroxyle et au moins un groupe carboxyle (-COOH), mise en contact du prépolymère cœur-écorce avec au moins une base en une quantité qui est appropriée pour neutraliser au moins 50 % des groupes carboxyle, et de l'eau, dans n'importe quel ordre, pour obtenir une dispersion aqueuse du prépolymère cœur-écorce au moins partiellement neutralisé ;
d) allongement de chaîne du prépolymère cœur-écorce au moins partiellement neutralisé en dispersion aqueuse avec des di- ou polyamines et/ou des cinquièmes alcools solubles dans l'eau ayant en moyenne chacun au moins deux groupes hydroxyle par molécule, ou des aminoalcools, afin d'obtenir un polyuréthane en dispersion aqueuse.

2. - Procédé selon la revendication 1, dans lequel le groupe latéral polyalkylèneglycoléther du premier alcool comporte plusieurs unités oxyde d'alkylène, de préférence en moyenne 5 à 70, de façon particulièrement préférée en moyenne 7 à 55 unités oxyde alkylène par molécule, et les unités oxyde d'alkylène sont de préférence constituées à plus de 50 % d'unités oxyde d'éthylène et de façon particulièrement préférée à 100 % d'unités oxyde d'éthylène.

3. - Procédé selon l'une des revendications 1 ou 2, dans lequel le deuxième alcool et le troisième alcool sont choisis dans le groupe constitué par les polymères ou copolymères ayant des liaisons éther, ester et/ou carbonate, des polyétherpolyols, des polyesterpolyols et/ou des polycarbonatepolyols ou leurs mélanges, le deuxième alcool et, le cas échéant, le troisième alcool présentant de préférence des groupes polycarbonate et, de façon particulièrement préférée, le deuxième et le troisième alcool étant un polycarbonatepolyol.

4. - Procédé selon au moins l'une des revendications précédentes, dans lequel le quatrième alcool présente une masse moléculaire de 100 à 500 g/mol et est de préférence l'acide 2,2-bis(hydroxyméthyl)butanoïque et/ou l'acide 2,2-bis(hydroxyméthyl)propionique.

5. - Procédé selon au moins l'une des revendications précédentes, dans lequel l'isocyanate, en particulier l'isocyanate de l'étape b), est un isocyanate aliphatique, de préférence choisi parmi un ou plusieurs membres du groupe constitué par: le 1,6-hexaméthylène diisocyanate, le 1,4-diisocyanatocyclohexane, le 1-isocyanato-3,5,5-triméthyl-5-isocyanatométhylcyclohexane et le tétraméthylxylylène diisocyanate.

6. - Procédé selon au moins l'une des revendications précédentes, dans lequel le premier, le deuxième et le troisième alcool sont mis à réagir sous forme de mélange avec les isocyanates.

7. - Procédé selon au moins l'une des revendications précédentes, dans lequel la réaction du premier prépolymère avec au moins le quatrième alcool à l'étape b) comporte l'addition d'autres isocyanates ayant en moyenne au moins deux groupes isocyanate par molécule.

8. - Procédé selon au moins l'une des revendications précédentes, dans lequel, en plus des alcools de l'étape a) ou du quatrième alcool de l'étape b), sont utilisés, à l'étape a) et/ou à l'étape b), un ou plusieurs monoalcools, qui présentent chacun au moins une double liaison, de préférence l'acrylate d'hydroxyéthyle et/ou l'acrylate d'hydroxyméthyle.

9. - Procédé selon au moins l'une des revendications précédentes, dans lequel est utilisé, à l'étape b) ou à l'étape a) et à l'étape b), un solvant organique, de préférence choisi parmi un ou plusieurs membres du groupe constitué par: l'acétone, la méthyléthylcétone, le diméthylsulfoxyde et/ou le N,N'-diméthylformamide, de façon particulièrement préférée l'acétone et/ou la méthyléthylcétone.

10. - Procédé selon la revendication 9, dans lequel le solvant organique est contenu dans la dispersion aqueuse du polyuréthane à raison de 1 à 30 % en poids, de préférence de 1,5 à 15 % en poids.

11. - Procédé selon au moins l'une des revendications précédentes, dans lequel les étapes a) et b) sont réalisées à une température de 40 à 90 °C, de préférence de 50 à 80 °C.

12. - Procédé selon au moins l'une des revendications précédentes, dans lequel l'indice d'acide du polymère cœur-écorce et/ou du polyuréthane s'élève à une valeur de 5 à 30 mg de KOH/g, de préférence de 8 à 24 mg de KOH/g et, de façon particulièrement préférée, de 10 à 20 mg de KOH/g.

13. - Procédé selon au moins l'une des revendications précédentes, dans lequel la dispersion aqueuse du polyuréthane présente 10 à 60 % en poids, de préférence 25 à 50 % en poids, de matières solides selon la norme **DIN EN** ISO 3251.

14. - Procédé selon au moins l'une des revendications précédentes, dans lequel la base est une amine secondaire et/ou une amine tertiaire, de préférence la triéthylamine (TEA) ou la diméthyléthanolamine (DMEA).

15. - Procédé selon au moins l'une des revendications précédentes, dans lequel le prépolymère présente une teneur en NCO de 2 à 8 % en poids, de préférence de 3 à 7 % en poids, et/ou le prépolymère cœur-écorce présente une teneur en NCO de 0,5 à 5 % en poids, de préférence de 0,5 à 2,9 % en poids.

16. - Dispersion aqueuse de polyuréthane, de préférence sous forme de liant pour un vernis, pouvant être préparée au moyen d'un procédé selon l'une des revendications 1 à 15, le cas échéant après dilution supplémentaire avec de l'eau et/ou des solvants et, le cas échéant, des agents mouillants et/ou des agents antimousse.

17. - Vernis, en particulier vernis transparent, comportant, outre la dispersion aqueuse de PU selon la revendication 16 en tant que liant, au moins un durcisseur, ledit durcisseur étant choisi parmi un ou plusieurs membres du groupe constitué par les polyisocyanates, comprenant les polyisocyanates bloqués, les polycarbodiimides, les polyaziridines et/ou les composés de triazine.

18. - Surface revêtue par le vernis selon la revendication 17, ladite surface étant constituée par le bois, le textile, le cuir, les matières plastiques, le métal et/ou un matériau minéral.
